# EUROPEAN PATENT APPLICATION

(11) **EP 4 194 084 A1**
(43) Date of publication of application: **14.06.2023**
(21) Application number: 21306747.3
(22) Date of filing: 10.12.2021
(51) Int. Cl.: B01J 20/22, B01D 53/02

(54) **METAL ORGANIC FRAMEWORKS FOR THE SELECTIVE CAPTURE OF VOLATIL ORGANIC COMPOUNDS COMPRISING CARBOXYLIC ACID FUNCTIONAL GROUP(S)**

(71) Applicant: Centre National de la Recherche Scientifique, 75016 Paris (FR); École Normale Supérieure, 75005 Paris (FR); Ecole Supérieure de Physique et de Chimie Industrielles de la Ville de Paris, 75005 Paris (FR); Instituto Superior Técnico, 1049-001 Lisboa (PT)
(72) Inventor: SEVERINO NEVES, Maria Inès, 91320 Wissous (FR); SERRE, Christian, 78370 Plaisir (FR); NOUAR, Farid, 78180 Montigny-le- Bretonneux (FR); PINTO, Moisès, 1750-440 Lisboa (PT); AL MOTHAR, Abeer, 1950-375 Lisboa (PT); FREITAS, Catia, 1900-140 Lisboa (PT)
(74) Representative: Novagraaf Technologies

(57) **Abstract**

The present invention relates, inter alia, to the use of porous crystalline solids constituted of a metal-organic framework (MOF) for the selective capture of volatile organic compounds (VOCs) comprising carboxylic acid functional group(s).

The MOF solids of the present invention can be used for the purification of air, for example for the selective capture of VOCs comprising carboxylic acid functional group(s) from outdoor air. It may be used for art preservation, such as the conservation of cellulose derivate films, for indoor air purification systems such as HEPA air filters, adsorbent purifiers, kettle filters, fette filters, honeycomb filters or air conditioning filters, for outdoor air purification systems such as gas mask, nose filter, adsorption columns or chimney filters, and in cosmetic applications such as deodorants, anti-odor shampoo, hygienic protection products, wipes or diapers.

## Description

### Field of the invention

The present invention relates, inter alia, to the use of porous crystalline solids constituted of a metal-organic framework (MOF) for the selective capture of volatile organic compounds (VOCs) comprising carboxylic acid functional group(s).

The MOF solids of the present invention can be used for the purification of air, for example for the selective capture of VOCs comprising carboxylic acid functional group(s) from outdoor air. It may be used for art preservation, such as the conservation of cellulose derivate films, for indoor air purification systems such as HEPA air filters, adsorbent purifiers, kettle filters, fette filters, honeycomb filters or air conditioning filters, for outdoor air purification systems such as gas mask, nose filter, adsorption columns or chimney filters, and in cosmetic applications such as deodorants, anti-odor shampoo, hygienic protection products, wipes or diapers.

The references in square brackets **[X]** refer to the list of references at the end of the examples.

### Background of the invention

Cultural heritage can be defined as a set of tangible objects such as monuments, architectural buildings, sculptures, paintings, films, and archaeological sites, as well as the traditions or living expressions inherited from our ancestors and passed on to our descendants **[1]**. One of the most recent tangible artefacts in cultural heritage are cellulose derivate films. During the past fifty years it has become clear that the chemical stability of these materials represents a major concern due to spontaneous chemical deterioration of cellulose triacetate that results in deacetylation and chain scission of the polymer giving rise to a specific type of degradation known as "Vinegar Syndrome", characterized by the vinegar-like odor released from the artefacts. This odor is resultant from emissions of the VOC acetic acid, one of the major pollutants in museums.

It is commonly admitted that polar VOCs comprising carboxylic functional group(s) are significant pollutants inside cars, museums and archives. For example, in museums, these VOCs need to be controlled, as reported for example in N. Blades et al., Guidelines on Pollution Control in Heritage Buildings, The Council For Museums, Archives And Libraries, London, 2000 **[2].** Cultural heritage conservation at museums and historical buildings depends indeed on the limitation of acetic acid pollution in indoor air and inside showcases, as reported for example in D. Thickett et al. in Met. 98 Proc. Int. Conf. Met. Conserv. (Eds.: W. Mourey, L. Robbiola), James & James, London, 1998, pp. 260-264 **[3],** and V. Kontozova et al. in Proc. art2002 7th Int. Conf. Nondestruct. Test. Microanal. Diagnostics Conserv. Cult. Environ. Herit. (Eds.: R. Van Grieken, K. Janssens, L. Van't dack, G. Meersman), University Of Antwerp, Antwerp, 2002 **[4],** Schieweck A, et al., in J Cult Herit. 2011 **[5],** and Al Mohtar et al. in Sci Rep. 2021 **[6].** This volatile organic pollutant causes reduction in the degree of polymerization of cellulose in paper, corrosion of lead-containing alloys and other metals, and degrade calcareous materials (stones, ceramics), as disclosed for example in B. Krupińska,et al., Microchem. J. 2013, 110, 350 **[7]** and Brokerhof, A. W. et al., in James & James (Science Publishers), London, **1996 [8],** Tétreault et al.,in Studies in Conservation, 2003, 48(4) **[9].** It may be readily formed from the degradation of woods, as reported in L. T. Gibson et al., Corros. Sci. 2010, 52, 172 **[10]** and, thus, complete elimination of sources is often difficult, if not impossible, and regular monitoring the acetic acid concentration in air is being proposed, as reported for example in T. Prosek et al. Corros. Sci. 2014, 87, 376 **[11].** A very low maximum average concentration of acetic acid of 400 and 40 ppb for a 1- and 100-year preservation target, respectively, for museum, gallery, library, and archival collections has been proposed in American Society of Heating Refrigeration and Air Conditioning Engineers, in Heating, Vent. Air-Conditioning Appl., ASHRAE, Atlanta, 2003 **[12].**

One option for its removal is the use of adsorbent materials at museums. Classic adsorbents, like zeolites and activated carbons, have been much applied to capture volatile organic compounds. However, acetic acid poses additional challenges comparing with other less acidic compounds, due to the competitive adsorption of water under normal humidity conditions of storage of cultural artefacts. Zeolites can have very polar surfaces to strongly interact with acetic acid, but they are then readily saturated with water at very low humidity levels, as reported in M. L. Pinto, et al., Adsorption 2003, 9, 303 **[13].** On the contrary, activated carbons are usually more hydrophobic than zeolites and are not saturated with water at normal relative humidity conditions (< 60%) **[14],** but they do not strongly bind acetic acid.

Metal-organic frameworks are a versatile class of porous hybrid crystalline architectures, developed in the last decades, made from the association of inorganic moieties and polycomplexing organic linkers, forming micro or meso-porous materials whose pore size, shape, surface area and hydrophilic/hydrophobic balance can be tuned for a wide range of potential applications. In the field of adsorption, the benefits of MOFs exhibiting active sites, like Lewis, Bronsted or redox or functional polar or apolar groups from the organic linkers, to interact specifically with polar or quadrupolar molecules, e.g. CO, NO or CO₂, to enhance the selectivity towards more inert species (e.g. alkanes) can be underlined. But nothing efficient has been reported yet about MOFs for a very efficient and selective capture of VOCs comprising carboxylic functional group(s) in a humid environment without the need to repell the water by the use of hydrophobic materials.

Therefore, there remains a need for finding stable means for selectively capturing VOCs comprising carboxylic acid functional group(s) from indoor air in cars, museums and archives, especially in a humid environment, that outperform those of all the reported so far, and that allow to preserve cultural heritages.

### Description of the present invention

To address this need, extensive research have been conducted by the present inventors in order to find specific MOFs that are capable to very efficiently and selectively adsorb VOCs comprising carboxylic acid functional group(s), even in a humid environment, that is for example found in rooms inside builings, and which is typically between about 40% to 60% relative humidity.

Before addressing the description of the invention itself, in order to facilitate an understanding of the present invention, a number of terms and phrases are defined here:
- As used herein other than the claims, the terms "a," "an," "the," and/or "said" means one or more. As used herein in the claim(s), when used in conjunction with the words "comprise," "comprises" and/or "comprising," the words "a," "an," "the," and/or "said" may mean one or more than one. As used herein and in the claims, the terms "having," "has," "is," "have," "including," "includes," and/or "include" has the same meaning as "comprising," "comprises," and "comprise." As used herein and in the claims "another" may mean at least a second or more. As used herein and in the claims, "about" refers to any inherent measurement error or a rounding of digits for a value (e.g., a measured value, calculated value such as a ratio), and thus the term "about" may be used with any value and/or range.
- The phrase "a combination thereof" "a mixture thereof" and such like following a listing, the use of "and/or" as part of a listing, a listing in a table, the use of "etc" as part of a listing, the phrase "such as," and/or a listing within brackets with "e.g.," or i.e., refers to any combination (e.g., any subset) of a set of listed components, and combinations and/or mixtures of related species and/or embodiments described herein though not directly placed in such a listing are also contemplated. Such related and/or like genera(s), sub-genera(s), specie(s), and/or embodiment(s) described herein are contemplated both in the form of an individual component that may be claimed, as well as a mixture and/or a combination that may be described in the claims as "at least one selected from," "a mixture thereof" and/or "a combination thereof."

- In general, the term "substituted" whether preceded by the term "optionally" or not, and substituents contained in formulae of this invention, refer to the replacement of hydrogen radicals in a given structure with the radical of a specified substituent. When more than one position in any given structure may be substituted with more than one substituent selected from a specified group, the substituent may be either the same or different at every position. As used herein, the term "substituted" is contemplated to include all permissible substituents of organic compounds.
- As used herein, the term "about" can refer to a variation of ±5%, ±10%,±20%, or ±25%, of the value specified. For example, "about 50" percent can in some embodiments carry a variation from 45 to 55 percent. For integer ranges, the term "about" can include one or two integers greater than and/or less than a recited integer. Unless indicated otherwise herein, the term "about" is intended to include values, e.g., concentration values, proximate to the recited range that are equivalent in terms of the functionality of the individual ingredient, the composition, or the embodiment.
- As used herein, the term "and/or" means any one of the items, any combination of the items, or all of the items with which this term is associated.
- As will be understood by the skilled artisan, all numbers, including those expressing quantities of ingredients, properties such as cavity/pore size and BET specific surface area, reaction conditions, and so forth, are approximations and are understood as being optionally modified in all instances by the term "about." These values can vary depending upon the desired properties sought to be obtained by those skilled in the art utilizing the teachings of the descriptions herein. It is also understood that such values inherently contain variability necessarily resulting from the standard deviations found in their respective testing measurements.
- As will be understood by one skilled in the art, for any and all purposes, particularly in terms of providing a written description, all ranges recited herein also encompass any and all possible subranges and combinations of subranges thereof, as well as the individual values making up the range, particularly integer values. A recited range includes each specific value, integer, decimal, or identity within the range. Any listed range can be easily recognized as sufficiently describing and enabling the same range being broken down into at least equal halves, thirds, quarters, fifths, or tenths. As a non-limiting example, each range discussed herein can be readily broken down into a lower third, middle third and upper third, etc.
- One skilled in the art will also readily recognize that where members are grouped together in a common manner, such as in a Markush group, the invention encompasses not only the entire group listed as a whole, but each member of the group individually and all possible subgroups of the main group. Additionally, for all purposes, the invention encompasses not only the main group, but also the main group absent one or more of the group members. The invention therefore envisages the explicit exclusion of any one or more of members of a recited group. Accordingly, provisos may apply to any of the disclosed categories or embodiments whereby any one or more of the recited elements, species, or embodiments, may be excluded from such categories or embodiments, for example, as used in an explicit negative limitation.
- As used herein, the expression "three-dimensional structure" is understood to mean a three-dimensional sequence or repetition of units or subvariants, as is conventionally understood in the field of MOF materials, that are also characterized as "organometallic polymers".

- As used herein, the term "solid" refers to any type of crystalline material. Said solid may be, for example, in the form of crystals, powder or particles of varied forms, for example of spherical, lamellar, etc. form. The particles may be in the form of nanoparticles.
- As used herein, "humid environment" means an atmosphere environment comprising water vapor. It can be the air with water vapor. The amount of water vapor present in the environment, e.g. air, increases as the temperature increases. The differences in the amount of water vapor in a parcel of air can be quite large. For example, a parcel of air that is near saturation (e.g. ≈ 100 % relative humidity) may contain 28 grams of water per cubic meter of air at 30 °C, but only 8 grams of water per cubic meter of air at 8 °C. Water vapor or vapour or aqueous vapor is the gaseous phase of water. It is one state of water within the hydrosphere. Under typical atmospheric conditions, water vapor is continuously generated by evaporation and removed by condensation. The vapor content of air may be measured with devices known as hygrometers. In the present invention, the amount of water vapor in the environment, e.g. air, may be from above dry air to saturation, for example from 10 to 30 °C, for example at room temperature, i.e. at a temperature between 18 °C and 28 °C.
- MOFs are constructed from bridging organic ligands, also named "linkers" or "linker" or "spacers" or "spacer" that remain intact throughout the synthesis, these ligands acting as linkers in the network of the obtained MOF structure. As used herein, the term "ligand" or "linker" or "spacer" refers to a ligand coordinated to at least two metals, which participates in providing distance between these metals and in forming empty spaces or pores, named also "core" in the MOF.
- As used herein, "aliphatic" refers to acyclic or cyclic, saturated or unsaturated carbon compounds, excluding aromatic compounds (IUPAC). Open-chain compounds, whether straight or branched, and which contain no rings of any type, are always aliphatic. Cyclic compounds can be aliphatic if they are not aromatic. Aliphatic compounds can be saturated, joined by single bonds (alkanes), or unsaturated, with double bonds (alkenes) or triple bonds (alkynes). Besides hydrogen, other elements can be bound to the carbon chain, the most common being oxygen, nitrogen, sulfur, and chlorine.
- As used herein, "aromatic" refers to cyclically conjugated molecular entity with a stability (due to delocalization) significantly greater than that of a hypothetical localized structure (e.g. Kekulé structure) that is said to possess aromatic character. Use of the term is based on application of the Hückel (4n + 2) rule and on consideration of the topology of orbital overlap in the transition states (IUPAC).

The present inventors have shown through the present invention, that it is possible to strongly enhance the selective capture of the VOCs comprising carboxylic acid functional group(s), even in a humid environment, for example that is normally found in buildings, by using a particular selection of MOFs, comprising Lewis acid sites built up from trimers of metal octahedra and interconnected by organic polycarboxylate linkers.

In particular, the present invention relates to the use of at least one porous Metal-Organic Framework (MOF) material for the selective adsorption of volatile organic compounds from a gaseous environment, such as air, said volatile organic compound comprising at least one carboxylic acid group, and said MOF material comprising at least 1 mmol/g of Lewis acid sites built up from trimers of metal octahedra and interconnected by organic polycarboxylate linkers.

The present invention relates also to a process of selective adsorption of organic volatile compounds from a gaseous environment, comprising a step of contacting at least one Metal-Organic Framework (MOF) material with a gaseous environment volume comprising organic volatile compounds, said volatile organic compounds comprising at least one carboxylic acid group, and said MOF material comprising at least 1 mmol/g of Lewis acid sites built up from trimers of metal octahedra and interconnected by organic polycarboxylate ligands.

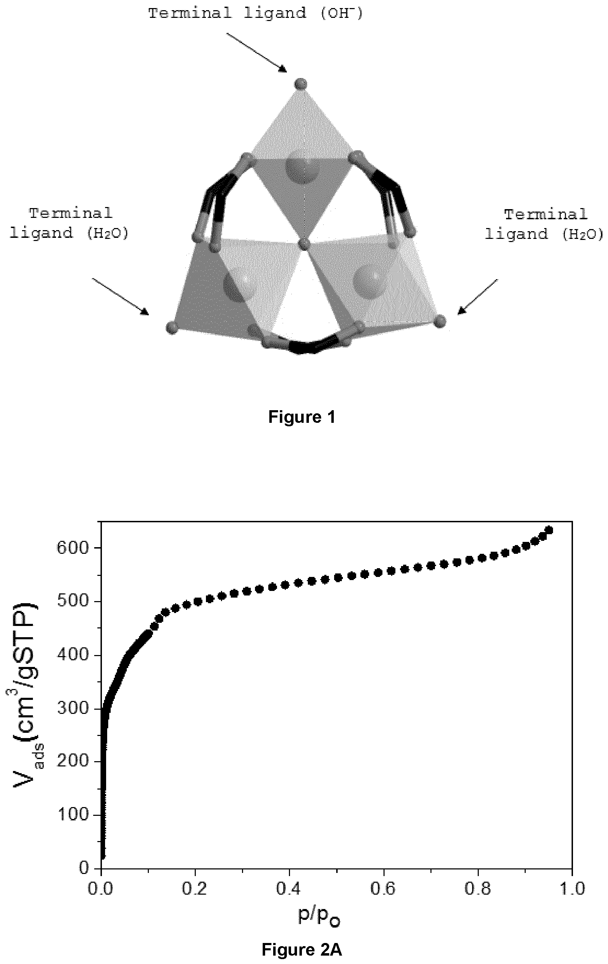

It is meant by "Lewis acid sites built up from trimers of metal octahedra", an element that can accept a pair of non-bonding electrons from another substance. In the trimer based MOF structures, three coordinated metals share one central µ3-oxo forming a trimer with six ligands acting as linkers in the structure and three terminal ligands to complete the metal coordination spheres, one HO⁻ and two water molecules with the Lewis acid sites being effective upon removal of terminal water ligands. In the use according to the invention, the carboxylate from the VOCs will replace the terminal water ligands which results in stronger Lewis acid sites-VOC interactions, see Figure 1 (Hydrogen atoms are omitted for clarity).

Advantageously, according to the present invention, the MOF, in terms of water adsorption isotherm at 30 °C, may adsorb more than 50% of the said MOF total adsorption capacity at p/po relative pressure of less than 0.4. The water adsorption isotherm at 30 °C may be measured in mmoles per gram of sample with a volumetric or gravimetric adsorption apparatus (preferably gravimetric adsorption apparatus), typically from low pressure to an atmospheric pressure of about 1 bar.

Advantageously, according to the present invention, the MOF material metallic centers may be chosen from Fe, Al, Ti, Mn, V, Sc, Mn, Cr and mixtures thereof, preferably from Fe, Al and mixtures thereof.

Advantageously, according to the present invention, the MOF material may comprise Lewis acid sites, built up from trimers of metal octahedra and interconnected by organic polycarboxylate linkers, at a concentration at least 1 mmol/g, preferably at least 1.5 mmol/g, and more preferably at least 2 mmol/g or at least 2.5 mmol/g. Preferably, the Lewis acid sites, built up from trimers of metal octahedra and interconnected by organic polycarboxylate linkers, are chemically accessible. It is meant by "chemically accessible", an available site in which a Lewis acid-base reaction can occur.

Advantageously, according to the present invention, the MOF material may have a specific surface area of more than 50 m²/g, preferably more than 100m²/g. The specific surface area being may be evaluated with the BET model from a N₂ isotherm at 77K of the said MOF material.

Advantageously, according to the present invention, the MOF material has an average pore size of at least 0.5 nm. The average pore size may be measured with the use of the crystallographic information file (CIF) of the said MOF. It may also be calculated from a nitrogen isotherm upon application of mathematical equations such as for instance a BJH (Barret-Joyner-Halenda), a DFT (Density Functional Theory) or a Dubinin-Astakhov method in which an average pore size distribution can be determined.

Advantageously, according to the present invention, the organic polycarboxylate linkers of the MOF(s) may be chosen from di-, tri- or tetra-carboxylic acids. Preferably, the organic polycarboxylate linkers of the MOF(s) may be chosen from:
- C₆ to C₂₄ aromatic polycarboxylate linkers, optionally bearing one or more substituents selected from a halo group (such as -Cl or -Br), -OH, -NH₂ and -NO₂, such as benzyl or naphtyl di-, tri- or tetracarboxylate, and
- C₄ to C₁₆ polycarboxylate aliphatic linkers, optionally bearing one or more substituents selected from a halo group (such as - Cl or -Br), -OH, -NH₂ and -NO₂.

Advantageously, each of the aforementioned linkers may preferably not bear apolar fluorinated groups and/or apolar C₁ to C₂₀ groups, grafted directly to the linkers and pointing within the pores of the MOF.

Advantageously, according to the present invention, the C₆ to C₂₄ aromatic polycarboxylate linkers, may be selected from terephtalate, 1H-pyrazole-3,5-dicarboxylate, 2,5-furandicarboxylate, naphtalene-2,6-dicarboxylate, biphenyl-4,4'-dicarboxylate, benzene-1,2,4-tricarboxylate, benzene-1,3,5-tricarboxylate, benzene-1,3,5-tribenzoate, benzene-1,2,4,5-tetracarboxylate, 3,3',5,5'-tetracarboxylatediphenylmethane, naphtalene-2,3,6,7-tetracarboxylate, naphtalene-1,4,5,8-tetracarboxylate, biphenyl-3,5,3',5'-tetracarboxylate, 2-chloroterephthalate, 2-bromoterephthalate, azobenzene dicarboxylate, azobenzene tetracarboxylate, 2,5-thiophenedicarboxylate, 2-aminoterephthalate, 2-nitroterephthalate, 2,5-dihydroxyterephthalate, 2,5-pyrazine dicarboxylate, azobenzene-4,4'dicarboxylate, 3,3'-dichloro-azobenzene-4,4'-dicarboxylate, 3,3'-dihydroxy-azobenzene-4,4'-dicarboxylate, 3,5,3',5'-azobenzene tetracarboxylate and mixtures thereof.

Advantageously, according to the present invention, the C₄ to C₁₆ polycarboxylate aliphatic linkers may be alkyl linkers. The C₄ to C₁₆ polycarboxylate alkyl linkers may be selected from di-, tri- or tetracarboxylate or carboxylic acid linkers, for example fumarate, succinate, glutarate, muconate, adipate and mixtures thereof.

Advantageously, according to the present invention, MOF material may be chosen from MIL-88A(Fe), MIL-88B(X)(Fe) in which X is selected from Br, NH₂, Cl, NO₂, 2OH and COOH **[14],** and mixtures thereof, more preferably from MIL-100(Fe, Al) **[15,16],** MIL-127(Fe) **[17]** and mixtures thereof.

The use according to the invention may be in air quality applications and/or cosmetic applications. It is meant by "air quality applications":
- art preservation, such as the conservation of cellulose derivate films (the deterioration compound of which catalysing the hydrolysis and oxidation of cellulose and cellulose ethers, meaning that acetic acid will have an autocatalytic effect on the cellulose base artefacts degragation; one way of controlling the integral losses of these artefacts being the removal of the VOC from museum storage/showcase **[18-20]**),
- indoor air purification systems such as HEPA air filters, adsorbent purifiers, kettle filters, fette filters, honeycomb filters or air conditioning filters,
- outdoor air purification systems such as gas mask, nose filter, adsorption columns or chimney filters,
- cosmetic applications such as deodorants, anti-odor shampoo, hygienic protection products, wipes or diapers.

Advantageously, according to the present invention, the gaseous environment may be air. The gaseous environment may be a humid environment, that is for example found in rooms inside builings, and which may have a relative humidity from 20% to 80%, preferably from 40% to 60%. The gaseous environment may have a temperature from 10 to 180 °C, preferably 15 to 100 °C, more preferably from 15 to 50 °C.

According to the present invention, the volatile organic compounds comprising carboxylic acid functional group(s) are volatile organic compound (VOC) having, at 293.15 K, a vapour pressure of 0.01 kPa or more, or having a corresponding volatility under the particular conditions of use. For the purpose of this Directive, the fraction of creosote which exceeds this value of vapour pressure at 293.15 K shall be considered as a VOC (Council directive 1999/13/EC of 11 March 1999 **[44]**). VOCs comprising carboxylic acid functional group(s) that may selectively be adsorbed according to the invention, may for example be chosen from acetic acid, formic acid, acrylic acid, propionic acid, isovaleric acid, propiolic acid, butyric acid, isobutyric acid, crotonic acid, methacrylic acid, diacetic acid, butynedioic acid, valeric acid, 2-methylbutanoic acid, pivalic acid, hexanoic acid, 2,3-trimethylbutanoic acid, 3-methylhexanoic acid, 2-ethyl-2-methylbutanoic acid, 3-ethylpentanoic acid, 3,3-dimethylpentanoic acid, 2,4-dimethylpentanoic acid, 2,3-dimethylpentanoic acid, 2-methylbutanoic acid and mixtures thereof.

These volatile organic compounds comprising carboxylic acid functional group(s) may be selectively adsorbed according to the present invention even in humid environnements, even far above the 40 % relative humidity found in museums, as shown in the examples below.

According to the present invention, the volatile organic compounds comprising carboxylic acid functional group(s) may be at a concentration, in the gaseous environment (preferably air), of at least 40 ppb, preferably at least 400 ppb and more preferably at least 1 ppm.

According to the present invention, the MOF is preferably under a form allowing a large exchange surface between the MOF and the environment where the polar volatile organic compounds have to be captured by adsorption. The MOF may for example be in the form of a powder, a granule, a pellet, an extrudate, a monolith, a composite embedded in the form of a foam material, a polymer or a fiber, or coated on a surface of a polymer material, of a paper sheet, of a fiber or of a metal. For example, document WO2009/123484 [23] published on October 2009 discloses a useful process for producing polyurethane foam filter material with adsorption capabilities that can be used to support the MOF to carry out the present invention. Other examples are the electropining of polymer containing MOF particles disclosed in documents M. Rose et al. Adv. Eng. Mater. 2011, 13, 356-360 **[24],** R. Ostermann at al. Chem. Commun. 2011, 47, 442-444 **[25],** J. Ren et al. Int. J. Hydrogen Energy 2015, 40, 9382-9387 **[26]** and M.R. Khan et al. J. Mater. Eng. Perform. 2016, 25, 1276-1283 **[27],** that give final composite fiber materials with supported MOF that simplify the application of MOF for the adsorption of volatile organic compounds. Other examples can include the use of MOFs in different shapes as, for example, in the form of granules as previously disclosed in the literature, Valekar et al., RSC Adv, 2017 **[28],** or pellets, Q. Ren, et al.," Chem. Eng. J., , 2015 **[29],** or by coating specific supports, as disclosed by Gkaniatsou et al., Nano Energy, 2020 **[30].**

According to the present invention, the at least one MOF material or at least one MOF under the form as described in previous paragraph may be comprised in a device chosen from air purifiers, sensors, adsorption columns, filters, respiration masks, adsorption towers, hygienic protection products, wipes or diapers.

The present invention allows advantageously the easy and selective removal of low concentrations of VOCs comprising carboxylic acid functional group(s) from indoor air, even in the presence of water in the atmosphere / environment, for example in museums, where it poses serious conservation problems. The present invention allows advantageously the easy and selective removal of low concentrations of VOCs comprising carboxylic acid functional group(s) from outdoor air, even in the presence of water in the atmosphere / environment, independently of the geographical location, for example via outdoor air purification systems such as gas mask, nose filter, adsorption columns or chimney filters. The present invention allows advantageously the easy and selective removal of low concentrations of odorous VOCs comprising carboxylic acid functional group(s) such as odorous molecules using deodorants, anti-odor shampoo, hygienic protection products, wipes or diapers, even in the presence of water in the atmosphere / environment. The following experiments and results confirms the benefits of the present invention, over the prior art solutions.

The following representative examples and figures are intended to help illustrate the invention, and are not intended to, nor should they be constructed to, limit the scope of the invention. Indeed, various modifications of the invention and many further embodiments thereof, in addition to those shown and described herein, will become apparent to those skilled in the art from the full contents of this document, including the examples which follow and the references to the scientific and patent literature cited herein. It should further be appreciated that the contents of those cited references are incorporated herein by reference to help illustrate the state of the art.

The following examples contain important additional information, examplification and guidance that can be adapted to the practice of this invention in its various embodiments and the equivalents thereof. MOFs with different amounts of Lewis acid sites are presented: MIL-100(Fe), 3.6 mmol/g iron(III) Lewis acid sites **[31]**, MIL-100(Al), 2.2 mmol/g aluminum(III) Lewis acid sites **[32]**, MIL-127(Fe), 2.7 mmol/g iron(III) Lewis acid sites **[33]**, and MIL-101(Cr), < 1 mmol/g chromium(III) Lewis acid sites **[34]**. MIL-100(Fe) and MIL-100(AI) have affinity towards water, reaching half of their total water capacity at *p*/*p*₀ < 0.4 (for MIL-100(Fe) at 0.35 *p*/*p₀* with around 17.5 mmol/g and 0.24 *p*/*p₀ with* around 13 mmol/g for MIL-100(Al) **[35]** all at 25°C). MIL-101(Cr) presents a lower affinity than the last for water, with half the capacity being obtained at *p*/*p*₀ < 0.5 **[36]**.

### Brief description of the drawings

Figure 1 represents a metal trimer. Each metal is six-coordinated by six oxygen atoms forming an octahedral environment (four oxygen atoms from the building ligand, one central µ3-oxo and one oxygen atom from a terminal ligand). Three coordinated metals share one central µ3-oxo forming a trimer with three terminal ligands, one HO⁻ and two water molecules (Hydrogen atoms are omitted for clarity). The Lewis acid sites are effective upon removal of terminal water ligands. In this invention, the carboxylate from the VOCs will replace the terminal water ligands which results in stronger Lewis acid sites-VOC interactions.
Figure 2A represents a nitrogen adsorption isotherm obtained from MIL-100(Fe) (Evacuated under primary vacuum at 150 °C for 15h). The Surface area obtained is ~1850 m².g-¹ (evaluated using the BET model).
Figure 2B represents a nitrogen adsorption isotherm obtained from MIL-100(AI) (Evacuated under primary vacuum at 150 °C for 15h). The Surface area obtained is ~1000 m².g-¹ (evaluated using the BET model).
Figure 2C represents a nitrogen adsorption isotherm obtained from MIL-127(Fe) (Evacuated under primary vacuum at 200 °C for 3h). The Surface area obtained is ~1400 m².g-¹ (evaluated using the BET model).
Figure 2D represents a nitrogen adsorption isotherm obtained from MIL-101(Cr) (Evacuated under primary vacuum at 220 °C for 15h). The Surface area obtained is around ~2700 m².g-¹ (evaluated using the BET model).
Figure 3A represents acetic acid adsorption isotherms at T=25 °C of activated (open circles) and non-activated (full squares) MIL-100(Fe).
Figure 3B represents acetic acid adsorption isotherms at T=25 °C of activated MIL-127(Fe).
Figure 4 represents propionic acid adsorption isotherms of at T=25 °C of activated MIL-100(Fe).
Figure 5 represents water adsorption isotherms at 25 °C of activated (open circles) and non-activated (full squares) MIL-100(Fe).
Figure 6A represents acetic acid concentration profiles inside a closed chamber at 40 %R.H without any adsorbent.
Figure 6B represents acetic acid concentration profiles inside a closed chamber at 40 %R.H for different MOFs.
Figure 7 represents TPD spectra of acetic acid and water (50/50% volume) mixture on MIL-100(Fe).
Figure 8 represents TPD spectra of proponic acid and water (50/50% volume) mixture on MIL-100(Fe).
Figur 9A represents P-XRD patterns of the experimental MIL-100(Fe) in 2Θ range 1.6-30° compared with the calculated pattern from the literature. **[37]**
Figure 9B represents P-XRD patterns of the experimental MIL-100(Al) in 2Θ range 1.6-30° compared with the calculated pattern from the literature. **[37]**
Figure 9C represents P-XRD patterns of the experimental MIL-127(Fe) in 2Θ range 5-30° compared with the calculated pattern from the literature. **[38,39]**
Figure 9D represents P-XRD patterns of the experimental MIL-101(Cr) in 2Θ range 1.6-30° compared with the calculated pattern from the literature. **[40]**
Figure 10A represents thermogravimetric analysis of MIL-100(Fe). Conducted under O₂ (heating rate of 5 °C per minute). The thermogravimetric analysis (performed under O₂ at 5 °C/min) shows two weight losses: the first one from 25 °C to 250 °C corresponds to the loss of water within the pores of the solid; the second weight loss is attributed to the degradation of the MOF at around 300 °C. From this, it can be seen that the expected losses are well within the expected ranges from literature.
Figure 10B represents thermogravimetric analysis of MIL-100(AI). Conducted under O₂ (heating rate of 5 °C per minute). Thermogravimetric analysis (performed under O₂ at 5 °C/min) shows two weight losses: the first one until 200 °C corresponds to the loss of water trapped in the micropores; the second weight loss is attributed to the degradation of the MOF at around 300 °C. From this, it can be seen that the expected losses are well within the expected ranges from literature.
Figure 10C represents thermogravimetric analysis of MIL-127(Fe). Conducted under O₂ (heating rate of 5 °C per minute). Thermogravimetric analysis (performed under O₂ at 5 °C/min) shows two weight losses: the first one until 200 °C corresponds to the loss of water trapped in the micropores; the second weight loss is attributed to the degradation of the MOF at around 300 °C. From this, it can be seen that the expected losses are well within the expected ranges from literature.
Figure 10D represents thermogravimetric analysis of MIL-101(Cr). Conducted under O₂ (heating rate of 5 °C per minute). Thermogravimetric analysis (performed under O₂ at 5 °C/min) shows two weight losses: the first one until 200 °C corresponds to the loss of water trapped in the pores; the second weight is attributed to the degradation of the MOF at around 300 °C. From this, it can be seen that the expected losses are well within the expected ranges from literature.

### Examples

According to the present invention, the usable MOFs materials and their preparation can be understood further by the examples that illustrate some of the processes by which these materials are prepared or used. It will be appreciated, however, that these examples should not be construed to limit the invention. Variations of the invention, now known or further developed, are considered to fall within the scope of the present invention as described herein and as hereinafter claimed.

### Example 1: Materials synthesis

**1.1. MIL-100(Fe)** a MOF with 3.6 mmol/g **[31]** of iron(III) Lewis acid sites was obtained via ambient pressure synthesis with 0.96 mol of 1,3,5-benzene tricarboxylic acid and 1.42 mol of iron(III) nitrate nonahydrated and 18 L of deionised water, adapted from the conditions referred in Nouar et al., EP3357929A1, 2018 **[15].** The mixture is stirred for 62 hours using a magnetic stirrer at a temperature of from 60 °C. The brown mixture is then filtered to obtain a brown solid which is washed several times with absolute water and ethanol, to remove the unreacted 1,3,5-benzene tricarboxylic acid. Then the powder is dried at room temperature.

**1.2. MIL-100(AI)** a MOF with 2.2 mmol/g **[32]** of aluminum(III) Lewis acid sites 6 mmol of 1,3,5-benzene tricarboxylic acid and 4 mmol of aluminium(III) nitrate nonahydrated are introduced in a 100 mL autoclave; 25 mL of deionised water are then added and the mixture is stirred for 10 minutes using a magnetic stirrer, as disclosed in the literature by Márquez et al. Eur J Inorg Chem., 2012, 100(32) **[16].** The suspension is then placed in a microwave oven and heated until 210 °C (ramp of 1 min). The temperature is kept stable for 5 minutes with power at 1400 W. The mixture is then centrifuged and is washed several times with absolute water and ethanol and dried at room temperature.

**1.3. MII-127(Fe)** a MOF with 2.7 mmol/g **[33]** of iron(III) Lewis acid sites was synthetisized by adding 2 mmol of NaOH to 4 mL of water and then stirring it. Then this solution is added to 1 mmol of 3,3',5,5'-azobenzenetetracarboxylic acid and 22 mL of isopropanol solution that was previously stirred, as disclosed in Chevreau et al., CrystEngComm. 2016, 18(22), 4094-4101 **[17].** A solution of 2 mmol of iron(III) chloride hexahydrated that was prepared with 17 mL of isopropanol, was finally added to the previous solution. The mixture is stirred and heated gradually until 130 °C for 24 hours. The reaction mixture is then filtered to obtain a yellow solid which is washed several times with absolute ethanol and dried at room temperature.

**1.4. MIL-101(Cr) (counter-example)** a MOF with < 1 mmol/g **[34]** of chromium(III) Lewis acid sites was synthesized by adding 12 mmol of benzene-1,4-dicarboxylic acid and 2 mmol of chromium nitrate nonahydrate to a 100 mL autoclave; 25 mL of deionised water are then added and the mixture is stirred for 10 minutes using a magnetic stirrer. The suspension is placed in a microwave oven and heated until 200 °C (ramp of 4 minutes). The protocol followed was adapted from Jhung et al, Adv. Mater. 2007 **[41].** The temperature is kept stable for 30 min with power at 1200 W. The mixture is then centrifuged and is washed several times with absolute water and ethanol and dried at room temperature.

### Example 2: Materials characterization

Three series of analysis have been carried out to confirm the obtention of the various materials synthetized in the above Example 1:
- Nitrogen adsorption at -196 °C;
- PXRD of the synthesized materials; and
- Thermogravimetric analysis of the synthesized materials.

**2.1 Nitrogen adsorption at -196 °C:** Nitrogen (Air Liquid, 99.999%) adsorption-desorption isotherms were measured at -196 °C using a liquid nitrogen cryogenic bath, in a volumetric automatic apparatus (Micromeritics, ASAP 2010). Prior to the measurement the samples were outgassed under primary vacuum . All results of these analysis confirm the porosity of the various materials synthetized in example 1 and are presented in figure 2A to 2D.

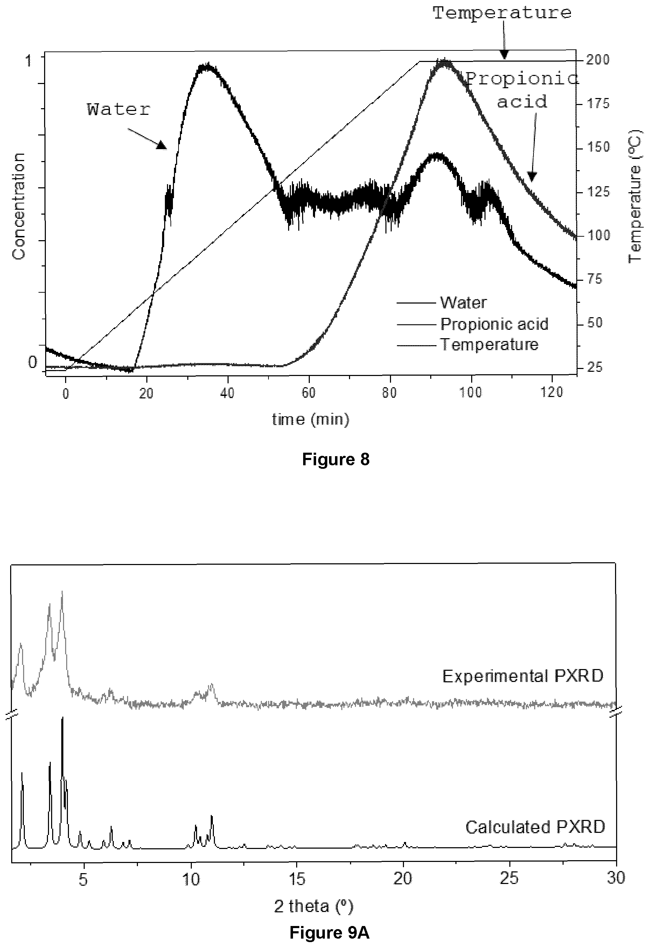

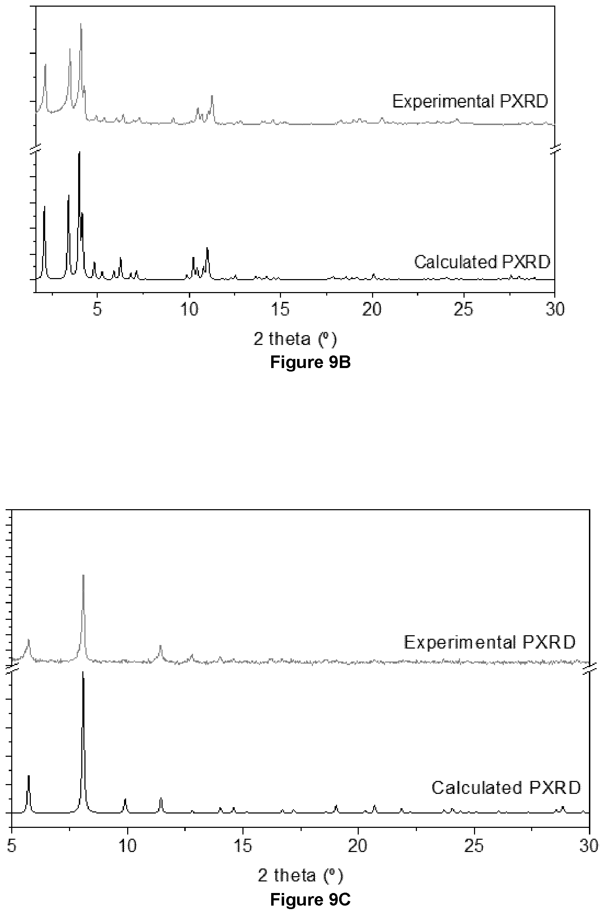

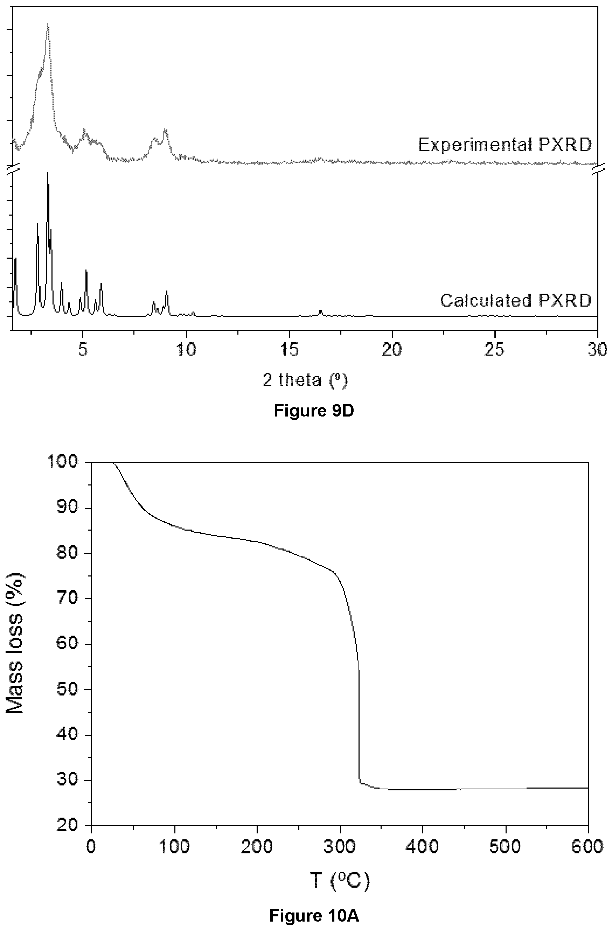

**2.2 PXRD patterns of the synthesized materials :** The powder X-ray diffraction patterns were obtained with a Bruker D8-Advance Diffractometer with Cu Kα radiation (λ = 1.5418Å). Diffraction patterns were recorded across a 2Θ range of 5-70°, with a step size of 0.02° and 0.1s per step. All results of these analysis confirm the obtention of the various crystalline materials synthetized in example 1 and are presented in figure 9A to 9D.

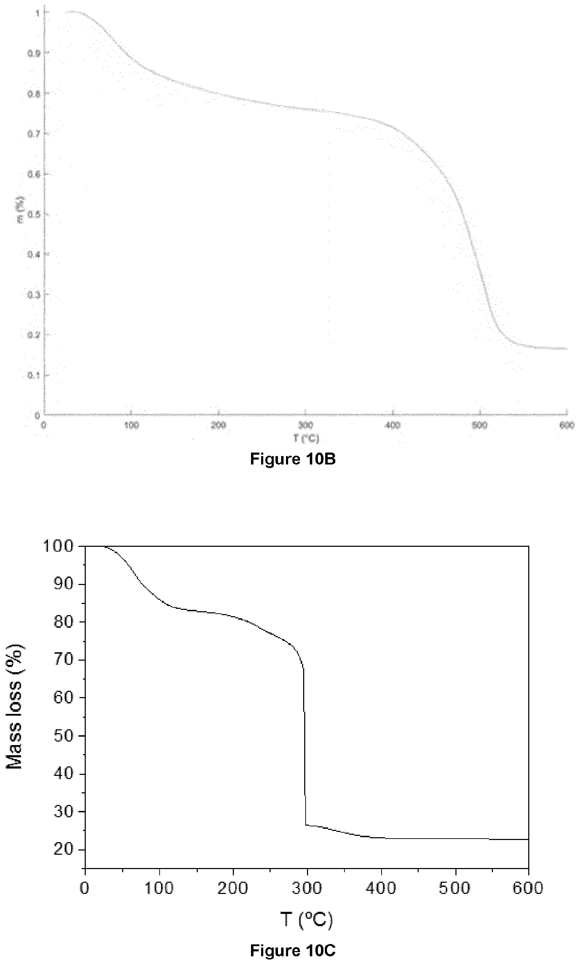

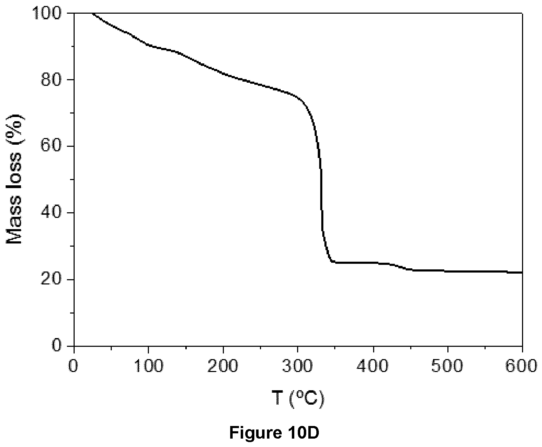

**2.3 Thermogravimetric analysis of the synthesized materials:** In order to obtain the TGA profile of each material synthesized, the samples (about 10 mg) were analysed with a gravimetric analyser (Mettler Toledo TGA/DSC 2, STAR system) under air at a constant rate of 5 °C/min. All results of these analyses confirm the purity of the various materials synthetized in example 1 and are presented in figure 10A to 10D.

### Example 3: experiments on adsorption capacity of the different materials

### 3.1. Protocol used for water adsorption measurements

Water adsorption isotherms were measured by the gravimetric method at relative pressures, up to 1.0 *p*/*p*₀, on about approximately 50 mg of the materials synthetized in example 1. The measurements were performed in a microbalance (CI Electronics) equipped with a pressure sensor (MKS a-BARATRON capacitance manometer of 100 Torr-range). The adsorption temperature was maintained with a water bath (VMR, VWB2 series, temperature stability 0.2 °C) at 25 °C. Prior to the experiments the materials were activated at the desired temperature under high vacuum (10⁻⁶ mbar).

### 3.2. Protocol used for acidic vapors adsorption measurements

Adsorption isotherms were measured by the gravimetric method at low relative pressure, up to 0.06 *p*/*p*₀, on about 50 mg different samples of the materials synthetized in example 1. The measurements were performed in a microbalance (CI Electronics) equipped with a pressure sensor (MKS a-BARATRON capacitance manometer of 100 Torr-range). The adsorption temperature was maintained with a water bath (VMR, VWB2 series, temperature stability 0.2 °C) at 25 °C. Prior to the measurements the materials were activated at the desired temperature under high vacuum (10⁻⁶ mbar).

### 3.3. Protocol used for acetic acid adsorption in a controlled relative humidity environment

Around 100 mg of materials were placed inside 10 cm³ glass vials and kept in an oven at 100 °C overnight. The vials were removed and closed tightly with polyethylene caps until being used in the experiments. 50 mg of adsorbent material was weighted (Mettler AE240) in a watch glass and immediately placed inside a glass chamber (2.9 dm³) with controlled humidity. The humidity was controlled to about 40% relative humidity by means of a saturated solution of potassium carbonate (BDH Prolabo, 99.6%). The chamber was flushed with nitrogen flow for 1 hour, where the gas passes through the saturated solution, to equilibrate in a humid environment. After this time, a syringe (Hamilton 7001 KH) was used to inject 1 µL of acetic acid (Riedel-de Haën, 99.8%) inside the chamber trough a rubber septum injection port. The total volatile organic compounds (TVOC) concentration, temperature and relative humidity inside the chamber were measured (Graywolf TG-502 TVOC ppb) and were recorded at fixed time interval (15 s) for one hour using computer software (Wolfsense LAP). During experiments, the temperature was 22.8±0.8 °C and the relative humidity was 43.5±3.5 %. A blank experiment with no injection of acetic acid was preformed and a control experiment was performed with injection of acetic acid without any MOF to demonstrate the tightness of the chamber during the experiments time frame and ascertain the TVOC signal response obtained by 1 µL injection.

### 3.4. Protocol used for Temperature-Programmed Desorption (TPD):

The protocol used for TPD was adapted from a dynamic adsorption system published by Sayari's group **[42]**. The flow of gases was controlled using mass flow meters (Stainless Steel Gas Thermal Mass Flo-Controller, McMillan 80SD), and the path of gases was controlled by 4-way valves. All the experiments were performed at a pressure slightly higher than the atmospheric pressure (103 kPa). Around 90 mg of activated sample (T=150 °C, D=15h) was loaded inside a stainless steel column of inner diameter of 6.4 mm. The material was regenerated at 200 °C for a duration of 2 hours under a flow of 44 cm³/min of He. The injection of vapors was enabled through a 6-way-valve. Liquid mixtures 50 %V/V organic vapor and water were injected to the system with the help of a 10-µL-volume loop connected to the 6-way-valve. The injected solution was evaporated using a heating element kept at 105 °C and carried out/diluted by He at flowrate of 44 cm³/min. Adsorption occurred at room temperature. The column was then heated from room temperature to T= 200 °C with a heating ramp of 2 °C/min. The composition of the column output was recorded as function of time with a mass spectrometer.

### Example 4: Results of the analysis

### 4.1 Nitrogen adsorption

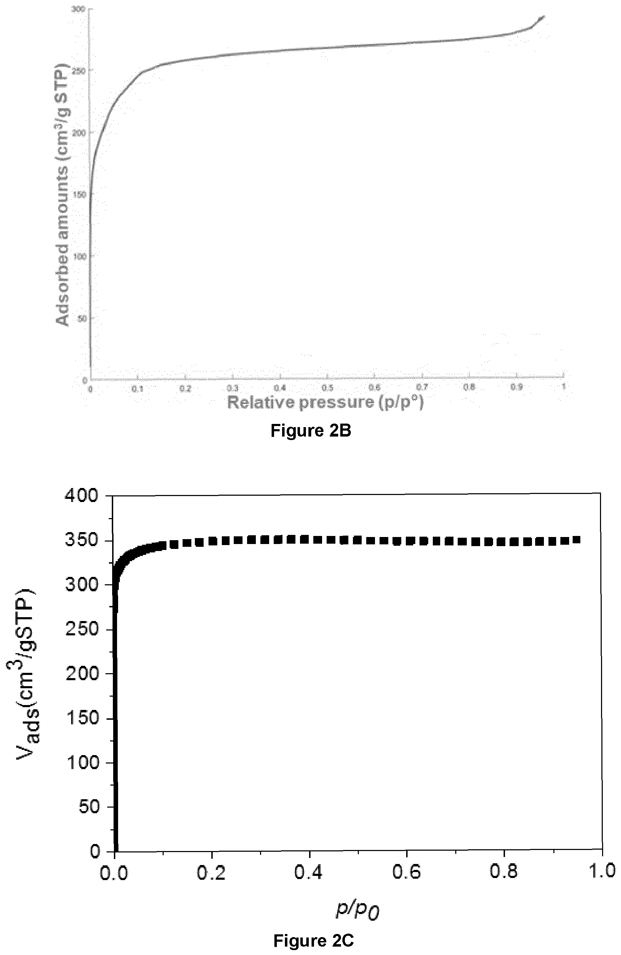

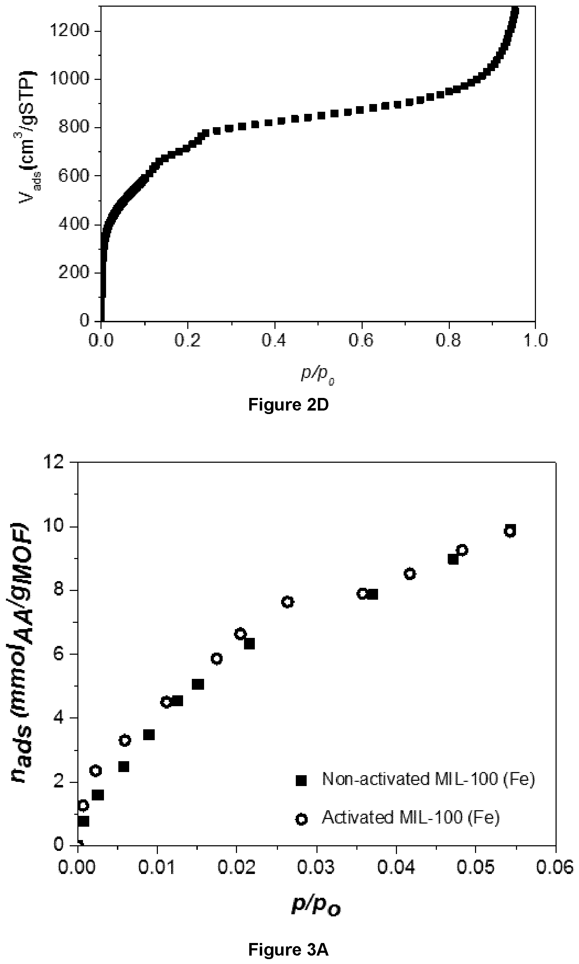

Figure 2 shows the obtained nitrogen adsorption isotherms, at - 196 °C, on on a) MIL-100(Fe), b) MIL-100(AI), c) MIL-127(Fe), d) MIL-101(Cr).

### 4.2 Acetic acid adsorption

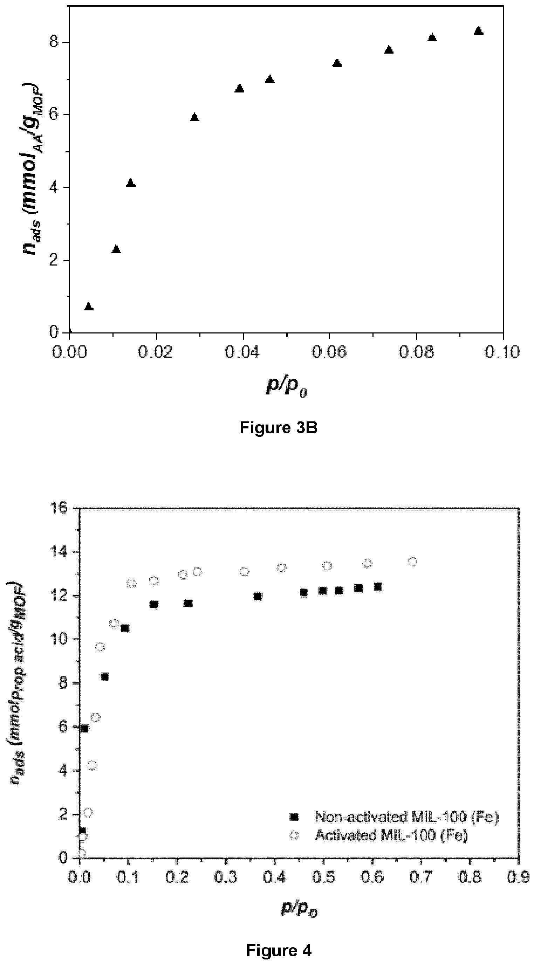

Figure 3 shows, acetic acid adsorption isotherms, at 25 °C, expressed as amount adsorbed per mass of a) MIL-100(Fe), b) MIL-127(Fe).

### 4.3 Propionic acid adsorption

Figure 4 shows, propionic acid adsorption isotherms, at 25 °C, expressed as amount adsorbed per mass of MIL-100(Fe). The steepness of the isotherms indicates that propionic acid strongly binds to the MOF in both activated and non activated samples. This is in agreement with the TPD results.

### 4.4 Water adsorption

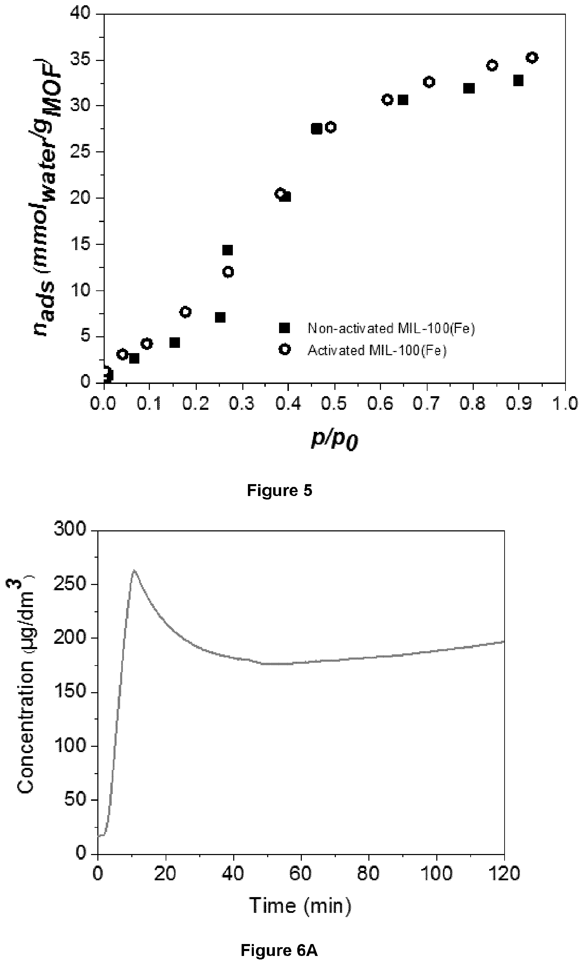

The water adsorption isotherms are represented on figure 5. This figure shows water adsorption isotherms, at 25 °C , on activated and non-activatedMIL-100(Fe). In MIL-100(Fe) the water isotherms displays an initial step below 0.1 *p*/*p*₀ attributed to the adsorption of water in the open metal sites. A second inflection is observed between 0.20 to 0.50 *p*/*p*₀ attributed to capillary condensation in the mesopores (type IV isotherm). The total water capacities at relative pressures of 0.9 are around 35 mmol/g. Half the total water capacity of the MOF is attained at *p*/*p*₀ < 0.4 (for 0.35 *p*/*p₀*, around 17.5 mmol/g is reached). This confirms the MOF adsorbs more than 50% of the said MOF total adsorption capacity at *p*/*p*₀ relative pressure of less than 0.4.

### 4.5 Removal of acetic acid with MOFs in the presence of 40% RH

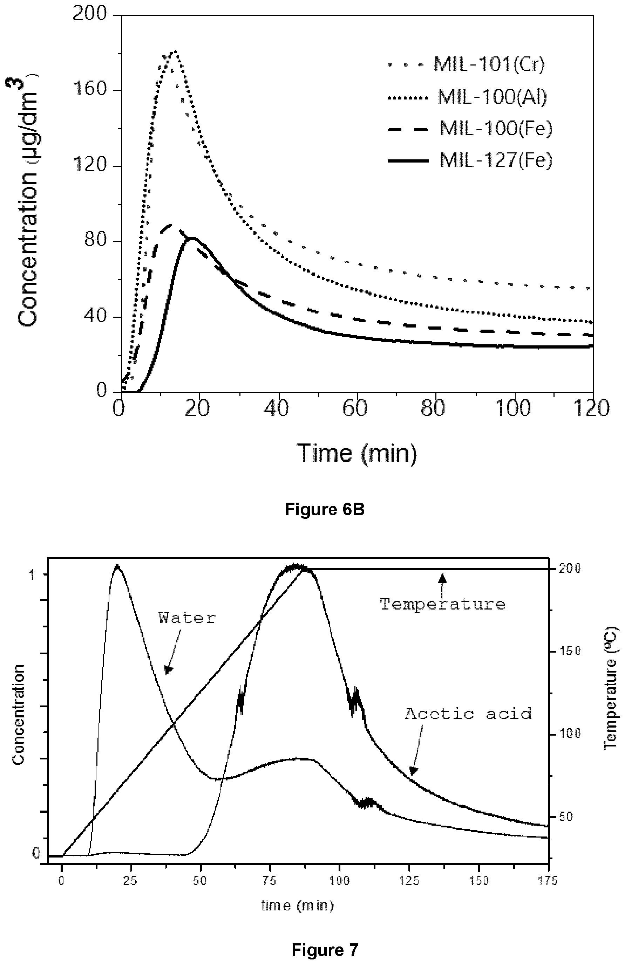

Figure 6 shows: a) Blank experiments with no injection of acetic acid (baseline) and the injection of acetic acid without the presence of adsorbents. b) Acetic acid concentration profiles inside a closed chamber after the injection of 1µL of acetic acid with 40% RH, in the presence of 50 mg of MIL-100(Fe), MIL-100(AI), MIL-127(Fe), and MIL-101(Cr). Regarding both iron base MOFs and aluminum base MOFs, which present Lewis acid sites concentration higher than 2 mmol/g, it is seen a comparable efficiency of removal of acetic acid since the concentration inside the chamber after one hour is similar. Therefore, even in the presence of humidity, the named MOFs adsorbe remarkably high amounts of acetic acid. Conversely, for the chromium base MOF, MIL-101(Cr), the number of Lewis acid sites is lower than 1 mmol/g, and consequently the removal of acetic acid from the chamber environment is poorer.

### 4.6 Temperature-programmed desorption (TPD) spectra of acetic acid and water mixture on MIL-100(Fe)

Figure 7 shows the TPD of water and acetic acid from MIL-100(Fe). The first peak of water appears at around 66 °C, a smaller peak appears at around 196 °C and a shoulder appears upon dwelling at 200 °C corresponding to more strongly bound water. An acetic acid peak appears at 196 °C, which is 130 °C after the first peak of water, indicating the higher affinity towards the first. Therefore, it is clear that acetic acid adsorbes preferentially to the MOF.

### 4.7 Temperature-programmed desorption (TPD) spectra of propionic acid and water mixture on MIL-100(Fe)

Figure 8 shows the TPD of water and propionic acid from MIL-100(Fe). The first peak of water appears upon dwelling at around 95 °C, a smaller peak appears at around 200 °C. The peak of propionic acid only appears upon dwelling at 200 °C. This indicates the higher affinity towards the latter. Therefore, it is clear that propionic acid adsorbes preferentially to the MOF.

### Exemple 5: Results

The removal of low concentrations of acetic acid from indoor air at museums and archives poses serious conservation problems that current adsorbents cannot easily solve due to the competitive adsorption of water. In these examples, trimers based MOFs with different pore sizes, topologies and metal centers have been studied to demonstrate that the use of trimer based MOFs can present performant selective adsorbants in the adsorption of carboxylic acids. This is a result of the presence of Lewis acid sites in these structures than can interact strongly with the acid vapors without showing necessarly a hydrophobic character.

Based on the above, it is expected that following the same protocol with formic acid will lead to similar results. The adsorption isotherm should show a steep increase at low pressures. The TPD will evidence a first peak related to water at lower temperatures, and a second peak at higher temperatures related to the formic acid, which will indicate a stronger formic acid-MOF affinity.

### LIST OF REFERENCES

1. United Nations Educational S and CO. Convention Concerning the Protection of the World Cultural and Natural Heritage. http://whc.unesco.org/en/conventiontext/. Accessed September 21, 2021.
2. Blades N, Oreszczyn T, Bordass B, and Cassar M. Guidelines on pollution control in heritage buildings. Museum Pract. 2000;15:1-27.
3. Thickett D, Bradley S, Lee L. Assessment of the Risks to Metal Artifacts Posed by Volatile Carbonyl Pollutants.; 1998.
4. V. Kontozova et al. in Proc. Art 2002 7th Int. Conf. Nondestruct. Test. Microanal. Diagnostics Conserv. Cult. Environ. Herit. (Eds.: R. Van Grieken, K. Janssens, L. Van't dack, G. Meersman), University Of Antwerp, Antwerp, 2002.
5. Schieweck A, Salthammer T. Indoor air quality in passive-type museum showcases. J Cult Herit. 2011;12(2):205-213. doi:10.1016/j.culher.2010.09.005
6. Al Mohtar A, Pinto ML, Neves A, et al. Decision making based on hybrid modeling approach applied to cellulose acetate based historical films conservation. Sci Rep. 2021; 11(1):16074. doi:10.1038/s41598-021-95373-0
7. B. Krupińska, R. Van Grieken, K. De Wael, Microchem. J. 2013, 110, 350.
8. Brokerhof, A. W.; Van Bommel, M. Deterioration of Calcareous Materials by Acetic Acid Vapour: A Model Study; James & James (Science Publishers) Ltd.: London, 1996.
9. Tétreault J, Cano E, Van Bommel M, et al. Corrosion of Copper and Lead by Formaldehyde, Formic and Acetic Acid Vapours. Stud Conserv. 2003;(3).
10. Gibson LT, Watt CM. Acetic and formic acids emitted from wood samples and their effect on selected materials in museum environments. Corros Sci. 2010;52(1):172-178. doi:10.1016/j.corsci.2009.08.054
11. Prosek T, Taube M, Dubois F, Thierry D. Application of automated electrical resistance sensors for measurement of corrosion rate of copper, bronze and iron in model indoor atmospheres containing short-chain volatile carboxylic acids. Corros Sci. 2014;87:376-382. doi:10.1016/j.corsci.2014.06.047
12. American Society of Heating, Refrigerating and Air-Conditioning Engineers I. Chapter 21 - In Heating, Ventilating, and Air-Conditioning: Applications; In: 2015 ASHRAE Handbook - Heating, Ventilating, and Air-Conditioning Applications. ; 2003.
13. Pires J, Pinto ML, Carvalho A, De Carvalho MB. Assessment of Hydrophobic-Hydrophilic Properties of Microporous Materials from Water Adsorption Isotherms. Adsorption. 2003;9(4):303-309. doi:10.1023/A:1026219813234
14. Horcajada P, Salles F, Wuttke S, et al. How linker's modification controls swelling properties of highly flexible iron(III) dicarboxylates MIL-88. J Am Chem Soc. 2011;133(44):17839-17847. doi:10.1021/ja206936e
15. M. Panchal, F. Nouar, C. Serre, M. Benzaqui, S. Sene, N. Steunou MGM. EP3357929A1 - Low Temperature Process For The Synthesis Of MOF Carboxylate Nanoparticles. 2018.
16. Garcia Márquez A, Demessence A, Platero-Prats AE, et al. Green microwave synthesis of MIL-100(AI, Cr, Fe) nanoparticles for thin-film elaboration. Eur J Inorg Chem. 2012;100(32):5165-5174. doi:10.1002/ejic.201200710
17. Chevreau H, Permyakova A, Nouar F, et al. Synthesis of the biocompatible and highly stable MIL-127(Fe): From large scale synthesis to particle size control. CrystEngComm. 2016;18(22):4094-4101. doi:10.1039/c5ce01864a
18. Al Mohtar A, Nunes S, Silva J, Ramos AM, Lopes J, Pinto ML. First-Principles Model to Evaluate Quantitatively the Long-Life Behavior of Cellulose Acetate Polymers. ACS Omega. 2021;6(12):8028-8037. doi:10.1021/acsomega.0c05438
19. N. S. Allen, M. Edge TSJ and CVH. Initiation of the degradation of cellulose triacetate base motion picture film. J Photogr Sci. 1990;38:54-59.
20. A. Tulsi Ram, D.Kopperl, R. Sehlin, S. Masaryk-Morris JV and PM. The Effects and Prevention of the "Vinegar Syndrome." In: AMIA, 1992.
21. Dupont AL, Tétreault J. Cellulose degradation in an acetic acid environment. Stud Conserv. 2000;45(3):201-210. doi:10.1179/sic.2000.45.3.201
22. Fenech A, Strlič M, Degano I, Cassar M. Stability of chromogenic colour prints in polluted indoor environments. Polym Degrad Stab. 2010;95(12):2481-2485. doi:10.1016/j.polymdegradstab.2010.08.009
23. PINTO, Moises, DA SILVA, Joao, BORDADO, João, NUNES, Antonio, BOAVIDA J. International patent application No 2009/123484 Al (81) POLYURETHANE FILTERS FOR AIR PURIFICATION (57). 2009;2009(October):1-14.
24. Rose M, Böhringer B, Jolly M, Fischer R, Kaskel S. MOF processing by electrospinning for functional textiles. Adv Eng Mater. 2011;13(4):356-360. doi:10.1002/adem.201000246
25. Ostermann R, Cravillon J, Weidmann C, Wiebcke M, Smarsly BM. Metal-organic framework nanofibers via electrospinning. Chem Commun. 2011;47(1):442-444. doi:10.1039/c0cc02271c
26. Ren J, Musyoka NM, Annamalai P, Langmi HW, North BC, Mathe M. Electrospun MOF nanofibers as hydrogen storage media. Int J Hydrogen Energy. 2015;40(30):9382-9387. doi:10.1016/j.ijhydene.2015.05.088
27. M.R. Khan et al. J. Mater. Eng. Perform. 2016, 25, 1276-1283
28. Valekar AH, Lee SG, Cho KH, et al. Shaping of porous metal-organic framework granules using mesoporous p-alumina as a binder. RSC Adv. 2017;7(88):55767-55777. doi:10.1039/c7ra11764g
29. Ren J, Musyoka NM, Langmi HW, Swartbooi A, North BC, Mathe M. A more efficient way to shape metal-organic framework (MOF) powder materials for hydrogen storage applications. Int J Hydrogen Energy. 2015;40(13):4617-4622. doi:10.1016/j.ijhydene.2015.02.011
30. Gkaniatsou E, Meng B, Cui F, et al. Moisture-participating MOF thermal battery for heat reallocation between indoor environment and building-integrated photovoltaics. Nano Energy. 2021;87(September):106224. doi:10.1016/j.nanoen.2021.106224
31. Yoon JW, Seo Y-K, Hwang YK, et al. Controlled Reducibility of a Metal-Organic Framework with Coordinatively Unsaturated Sites for Preferential Gas Sorption. Angew Chemie. 2010;122(34):6085-6088. doi:10.1002/ange.201001230
32. Volkringer C, Leclerc H, Lavalley JC, et al. Infrared spectroscopy investigation of the acid sites in the metal-organic framework aluminum trimesate MIL-100(AI). J Phys Chem C. 2012;116(9):5710-5719. doi:10.1021/jp210671t
33. Eubank JF, Wheatley PS, Lebars G, et al. Porous, rigid metal(III)-carboxylate metal-organic frameworks for the delivery of nitric oxide. APL Mater. 2014;2(12). doi:10.1063/1.4904069
34. Hwang YK, Hong DY, Chang JS, et al. Selective sulfoxidation of aryl sulfides by coordinatively unsaturated metal centers in chromium carboxylate MIL-101. Appl Catal A Gen. 2009;358(2):249-253. doi:10.1016/j.apcata.2009.02.018
35. Jeremias F, Khutia A, Henninger SK, Janiak C. MIL-100(AI, Fe) as water adsorbents for heat transformation purposes - A promising application. J Mater Chem. 2012;22(20):10148-10151. doi:10.1039/c2jm15615f
36. Dedecker K, Pillai RS, Nouar F, et al. Metal-Organic Frameworks for Cultural Heritage Preservation: The Case of Acetic Acid Removal. 2018. doi:10.1021/acsami.8b02930
37. Horcajada P, Surblé S, Serre C, et al. Synthesis and catalytic properties of MIL-100(Fe), an iron(III) carboxylate with large pores. Chem Commun. 2007;100(27):2820-2822. doi:10.1039/b704325b
38. Liu Y, Eubank JF, Cairns AJ, et al. Assembly of Metal-Organic Frameworks (MOFs) based on indium-trimer building blocks: A porous MOF with soc topology and high hydrogen storage. Angew Chemie - Int Ed. 2007;46(18):3278-3283. doi:10.1002/anie.200604306
39. Pang M, Cairns AJ, Liu Y, Belmabkhout Y, Zeng HC, Eddaoudi M. Synthesis and integration of Fe-soc-MOF cubes into colloidosomes via a single-step emulsion-based approach. J Am Chem Soc. 2013;135(28):10234-10237. doi:10.1021/ja403994u
40. Férey C, Mellot-Draznieks C, Serre C, et al. Chemistry: A chromium terephthalate-based solid with unusually large pore volumes and surface area. Science 2005;309(5743):2040-2042. doi:10.1126/science.1116275
41. Jhung SH, Lee JH, Yoon JW, Serre C, Férey G, Chang JS. Microwave synthesis of chromium terephthalate MIL-101 and its benzene sorption ability. Adv Mater. 2007;19(1):121-124. doi:10.1002/adma.200601604
42. Serna-Guerrero R, Sayari A. Modeling adsorption of CO2 on amine-functionalized mesoporous silica. 2: Kinetics and breakthrough curves. Chem Eng J. 2010;161(1-2):182-190. doi:10.1016/j.cej.2010.04.042 43. (31999L0013) Council directive 1999/13/EC of 11 March 1999. Offical Journal L 085 29/03/1999 p. 0001 - 0022.

## Claims

**1.** A use of at least one porous Metal-Organic Framework (MOF) material for the selective adsorption of volatile organic compounds from a gaseous environment, such as air, said volatile organic compound comprising at least one carboxylic acid group, and said MOF material comprising at least 1 mmol/g of Lewis acid sites built up from trimers of metal octahedra and interconnected by organic polycarboxylate linkers.

**2.** The use according to claim 1, wherein the MOF, in terms of water adsorption isotherm at 30 °C, adsorbs more than 50% of the said MOF total adsorption capacity at *p*/*p*₀ relative pressure of less than 0.4.

**3.** The use according to claim 1 or 2, wherein the MOF material metallic centers are chosen from Fe, Al, Ti, Mn, V, Sc, Mn, Cr and mixtures thereof, preferably from Fe, Al and mixtures thereof.

**4.** The use according to any one of preceding claims, wherein the MOF material comprises Lewis acid sites, built up from trimers of metal octahedra and interconnected by organic polycarboxylate linkers, at a concentration of at least 1.5 mmol/g, preferably at least 2 mmol/g or at least 2.5 mmol/g.

**5.** The use according to any one of preceding claims, wherein the MOF material has a specific surface area of more than 50 m²/g, preferably more than 100 m²/g, said specific surface area being evaluated with the BET model from a N₂ isotherm at 77K of the said MOF material.

**6.** The use according to any one of preceding claims, wherein the MOF material has an average pore size of more than 0.5 nm.

**7.** The use according to any one of preceding claims, wherein the organic polycarboxylate linkers are chosen from di-, tri- or tetra-carboxylic acids, preferably from the group comprising:
- C₆ to C₂₄ aromatic polycarboxylate linkers, optionally bearing one or more substituents selected from a halo group, -OH, -NH₂ and - NO₂, and
- C₄ to C₁₆ polycarboxylate aliphatic linkers, optionally bearing one or more substituents selected from a halo group, -OH, -NH₂ and - NO₂.

**8.** The use according to claim 7, wherein the C₆ to C₂₄ aromatic polycarboxylate linkers are selected from terephtalate, 1H-pyrazole-3,5-dicarboxylate, 2,5-furandicarboxylate, naphtalene-2,6-dicarboxylate, biphenyl-4,4'-dicarboxylate, benzene-1,2,4-tricarboxylate, benzene-1,3,5-tricarboxylate, benzene-1,3,5-tribenzoate, benzene-1,2,4,5-tetracarboxylate, 3,3',5,5'-tetracarboxylatediphenylmethane, naphtalene-2,3,6,7-tetracarboxylate, naphtalene-1,4,5,8-tetracarboxylate, biphenyl-3,5,3',5'-tetracarboxylate, 2-chloroterephthalate, 2-bromoterephthalate, azobenzene dicarboxylate, azobenzene tetracarboxylate, 2,5-thiophenedicarboxylate, 2-aminoterephthalate, 2-nitroterephthalate, 2,5-dihydroxyterephthalate, 2,5-pyrazine dicarboxylate, azobenzene-4,4'dicarboxylate, 3,3'-dichloro-azobenzene-4,4'-dicarboxylate, 3,3'-dihydroxy-azobenzene-4,4'-dicarboxylate, 3,5,3',5'-azobenzene tetracarboxylate and mixtures thereof.

**9.** The use according to claim 7, wherein the C₄ to C₁₆ polycarboxylate aliphatic linkers are C₄ to C₁₆ polycarboxylate alkyl linkers, preferably selected from fumarate, succinate, glutarate, muconate, adipate and mixtures thereof.

**10.** The use according to any one of preceding claims, wherein MOF material is chosen from MIL-88A(Fe), MIL-88B(X)(Fe) in which X is selected from Br, NH₂, Cl, NO₂, 2OH and COOH, and mixtures thereof, more preferably from MIL-100(Fe, Al), MIL-127(Fe) and mixtures thereof.

**11.** The use according to any one of preceding claims in air quality applications, preferably for art preservation, indoor air purification systems such as HEPA air filters, adsorbent purifiers, kettle filter, fette filter, honeycomb filter or air conditioning filters, outdoor air purification systems such as gas mask, nose filter, adsorption columns or chimney filters, cosmetic application such as deodorants, anti-odor shampoo, hygienic protection products, wipes or diapers.

**12.** The use according to any one of preceding claims, wherein the gaseous environment is air, the gaseous environment preferably having a relative humidity from 20% to 80%, preferably from 40% to 60%, and preferably having a temperature from 10 to 180 °C, preferably from 15 to 100 °C, more preferably from 15 to 50 °C.

**14.** The use according to any one of preceding claims, wherein the volatile organic compounds are chosen from VOCs comprising carboxylic acid functions, preferably chosen from acetic acid, formic acid, acrylic acid, propionic acid, isovaleric acid, propiolic acid, butyric acid, isobutyric acid, crotonic acid, methacrylic acid, diacetic acid, butynedioic acid, valeric acid, 2-methylbutanoic acid, pivalic acid, hexanoic acid, 2,3-trimethylbutanoic acid, 3-methylhexanoic acid, 2-ethyl-2-methylbutanoic acid, 3-ethylpentanoic acid, 3,3-dimethylpentanoic acid, 2,4-dimethylpentanoic acid, 2,3-dimethylpentanoic acid, 2-methylbutanoic acid and mixtures thereof.

**15.** The use according to any one of preceding claims, wherein the concentration of the volatile organic compound in the gaseous environment is of at least 40 ppb, preferably at least 400 ppb and more preferably at least 1 ppm.

**16.** Use according to any one of preceding claims, wherein the at least one MOF material is under the form of a powder, a granule, a pellet, an extrudate, a monolith, a composite embedded in the form of a foam material, a polymer or a fiber, or coated on a surface of a polymer material, of a paper sheet, of a fiber or of a metal.

**17.** Use according to any one of preceding claims, wherein the at least one MOF material or at least one MOF under the form as described in preceding claim is comprised in a device chosen from air purifiers, sensors, adsorption columns, filters, respiration masks, adsorption towers, hygienic protection products, wipes or diapers.
